# EUROPEAN PATENT SPECIFICATION

(11) **EP 3 935 527 B1**
(45) Date of publication and mention of the grant of the patent: **04.11.2026**
(21) Application number: 20706350.4
(22) Date of filing: 28.02.2020
(51) Int. Cl.: G06F 21/10, H04W 12/00, H04W 12/08, H04W 12/68, H04L 9/40

(54) **BEHAVIOURAL ACCESS CONTROL**
VERHALTENSZUGANGSKONTROLLE
CONTRÔLE D'ACCÈS COMPORTEMENTAL

(30) Priority: 07.03.2019 EP 19161165
(43) Date of publication of application: 12.01.2022
(73) Proprietor: British Telecommunications public limited company, London E1 8EE (GB)
(72) Inventor: GELARDI, Gabriele, London EC4V 5BT (GB); DUCATEL, Gery, London EC4V 5BT (GB)
(74) Representative: British Telecommunications public limited company Intellectual Property Department
(86) International application number: PCT/EP2020/055371
(87) International publication number: WO 2020/178210

(56) References cited:
- WO-A1-2018/025019
- US-A1- 2015 373 051
- US-A1- 2016 366 126
- US-A1- 2017 024 660
- US-A1- 2017 177 999

## Description

The present invention relates to access control for a user device.

User devices such as portable computing devices, tablet computers, smartphones, mobile terminals and the like are increasingly mobile and pervasive. Access control security measures for such devices typically involve a password, codeword, numeric or pattern-based lock or employ biometrics such as fingerprint or facial recognition. However, once access is gained to a device, the access is typically persistent while the device is in-use or at least until some expiry condition. Accordingly, accessing an unlocked device provides access to the device limited recourse to access control mechanisms.

Thus, there is a challenge in providing access control for user devices that address and/or mitigate these challenges. A method of dynamic authentication using distributed mobile sensors is described in US2015/373051. A screen analysis based security access technique is described in US2016/366126, in which failure to authenticate based on screen analysis results in the user being presented with a challenge.

The scope of protection of the invention is defined in the claims.

According to a first implementation, there is a provided a computer implemented method of access control for a user device as recited in Claim 1.

Preferably, the threshold degree of compliance is a proportion of classifiers classifying behaviours as compliant. Preferably, each of the classifiers is weighted for determining the threshold degree of compliance. Preferably, the component is one or more of: a location sensor; a position sensor; an orientation sensor; an accelerometer; an input device; a touch-screen; a temperature sensor; a time determiner; a pressure sensor; an olfactory sensor; a chemical sensor; a biometric sensor; a heart rate sensor; a cardiogram generator; a sound sensor; a voice recognition component; a handwriting recognition component; a global positioning system; and a gyroscope.

Preferably, the credential-based authentication includes one or more of: an authentication scheme using a user identifier and password; a key-based user authentication scheme; a token-based user authentication scheme; and a multi-factor authentication scheme in which authentication is requested via a different device.

According to a second implementation, there is a provided a computer system including a processor and memory storing computer program code for performing the steps of the method set out above.

According to a third implementation, there is a provided a computer system including a processor and memory storing computer program code for performing the steps of the method set out above.

Embodiments of the present invention will now be described, by way of example only, with reference to the accompanying drawings, in which:
Figure 1 is a block diagram a computer system suitable for the operation of embodiments of the present invention;
Figure 2 is a component diagram of an arrangement for access control for a user device according to an embodiment of the present invention;
Figure 3 is a flowchart of a method of access control according to an embodiment of the present invention;
Figure 4 is an alternative arrangement of the access control component of Figure 2 in accordance with an embodiment of the present invention;
Figure 5 is a flowchart of a permissive access control mechanism for a user device according to an embodiment of the present invention;
Figure 6 is an alternative arrangement of the access control component of Figure 2 in accordance with an embodiment of the present invention;
Figure 7 is a flowchart of a method of training a classifier for use with the embodiments of Figures 3, 5, 9 and/or 11 in accordance with an embodiment of the present invention;
Figure 8 is a component diagram of an arrangement for behaviour-based access control for a user device according to an embodiment of the present invention;
Figure 9 is a flowchart of a method of access control for the embodiment of Figure 8 in accordance with an embodiment of the present invention;
Figure 10 is a component diagram of an arrangement for multi-classifier access control for a user device according to an embodiment of the present invention; and
Figure 11 is a flowchart of a method of access control for the embodiment of Figure 10 in accordance with an embodiment of the present invention.

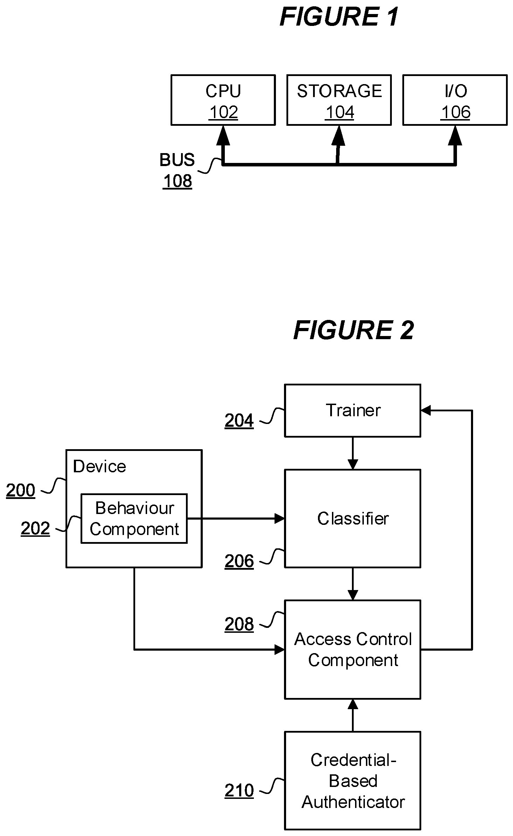

Figure 1 is a block diagram of a computer system suitable for the operation of embodiments of the present invention. A central processor unit (CPU) 102 is communicatively connected to a storage 104 and an input/output (I/O) interface 106 via a data bus 108. The storage 104 can be any read/write storage device such as a random-access memory (RAM) or a non-volatile storage device. An example of a non-volatile storage device includes a disk or tape storage device. The I/O interface 106 is an interface to devices for the input or output of data, or for both input and output of data. Examples of I/O devices connectable to I/O interface 106 include a keyboard, a mouse, a display (such as a monitor) and a network connection.

Figure 2 is a component diagram of an arrangement for access control for a user device 200 according to an embodiment of the present invention. The user device 200 is a computing device such as a portable computing device, tablet computer, smartphone, mobile terminal, gaming device, in-vehicle information system, in-vehicle control device, medical device, communications device, entertainment device or other device as will be apparent to those skilled in the art and as may be conceived even after the relevant date of the present application. The user device 200 is used by at least one user in a manner that constitutes user behaviour. Such behaviours can include, by way of example only and inter alia: a particular holding, handling, orientation and/or movement of the device 200; a rotation, degree of pressure, speed of interaction, frequency of interaction of the device 200; a location, position, relative location, speed, velocity or altitude of the device; an environmental characteristic, temperature, humidity or pressure of the device; the use of a particular hand, finger, limp, facial feature to handle, hold or interact with the device; particular biometric characteristics of the user using the device; characteristics of use of the device including particular user interaction behaviours such as user interface gestures, characteristic interactions, swipes, button presses, style of interaction, pressure of interaction; and other behavioural characteristics as will be apparent to those skilled in the art. Notably, certain of the exemplary behaviours are described in terms characteristics of a user, an environment, the device or interaction therebetween and these are considered to constitute behaviours of the user who, for example, places the device in such environment, or interacts using such user characteristics.

The device 200 includes at least one behaviour component 202 as a hardware, software, firmware or combination component adapted to determine a behaviour of a user of the device 200. For example, the behaviour component 202 can include one or more of, inter alia: a location sensor; a position sensor; an orientation sensor; an accelerometer; an input device; a touch-screen; a temperature sensor; a time determiner; a pressure sensor; an olfactory sensor; a chemical sensor; a biometric sensor; a heart rate sensor; a cardiogram generator; a sound sensor; a voice recognition component; a handwriting recognition component; a global positioning system; a gyroscope; and other behaviour components as will be apparent to those skilled in the art.

An access control component 208 is provided as a hardware, software, firmware or combination component for providing access control for the device 200. Access control includes determining, for a user seeking to access or accessing the device 200, whether the user's access is authorised and providing or continuing access for such user, or alternatively whether the user's access is not authorised and preventing access for such user. Preventing access can include, for example, locking, powering off, disabling or otherwise securing the device 200 from use by the unauthorised user.

The access control component 208 is arranged to perform access control interventions for the device 200 by which access to the device 200 by a user is granted or prevented, the interventions being triggered according to one or more predetermined rules. In one embodiment, the access control component 208 is configured to undertake continuous authentication of a user such that access control is implemented on a regular, routine or substantially continuous basis, such as, for example, inter alia: every predetermined period of time according to a particular frequency; whenever a particular operation or class of operation is performed by the device 200 such as opening an application, performing a data transfer, accessing a screen or the like; on the basis of a stochastic variable such that authentication is triggered periodically stochastically; or on some other continuous, regular or similar basis as will be apparent to those skilled in the art.

The access control component 208 is operable with a classifier 206 constituted as a machine learning algorithm such as, by way of example: a perceptron classifier; a naive Bayes classifier; a decision tree classifier; a logistic regression classifier; a k-nearest neighbour classifier; an artificial neural network or deep learning classifier; a support vector machine or other classifier as will be apparent to those skilled in the art. The classifier is trained by a trainer 204 as a software, hardware, firmware or combination component adapted to undertake training of the classifier 206 based on training examples. In particular, the classifier 206 is trained based on behaviour of a user (or, conceivably, multiple users) of the device 200 determined by the behaviour component 202 such that the classifier is able to classify subsequent user behaviour as either compliant with training examples for an authorised user or non-compliant. Notably, a classification of non-compliance is a classification that behaviour is not consistent with behaviour of an authorised user as learned by the classifier 206. In some embodiments, the classifier 206 can be further trained with training examples including behaviour of non-authorised users such that the determination of non-compliance by way of the classifier 206 can also be effected as a consistency of behaviour with the training examples for non-authorised users. Accordingly, the trainer 204 initially trains the classifier 206 with at least one prior behaviour of an authorised user, each training example including a characterisation of a behaviour and, in some embodiments, an indication of whether such behaviour related to an authorised or un-authorised user. Behaviour characteristics can be encoded for use in training and sampling the classifier 206 using any suitable method such as a one-hot or multi-hot vector encoding.

Thus, in use, the access control component 208 provides a determination of whether a user of the device 200 is authorised to access the device based on behaviour characteristics received from the behaviour component 202 and with reference to the classifier 206. According to embodiments of the present invention, the access control component 208 is further adapted to trigger or perform additional training of the classifier 206 responsive to at least positive authentications of a user accessing the device 200 so as to further improve a model, data structure, neural network or other machine learning construct of the classifier 206 and, therefore, the suitability of the classifier 206 for classifying user behaviours as compliant (for authorisation) or non-compliant (for non-authorisation). Thus, on determination of at least a positive authorisation of a user based on a behaviour classification for the user, the access control component 208 formulates a new training example including the user's behaviour and, depending on the machine learning approach, its classification as a compliant behaviour, and triggers the trainer 204 to perform a further training process of the classifier using such new training example, such further training being additional to all prior training of the classifier 206. Thus, the classifier 206 is constructively trained in that it is trained additionally to its existing training so as to progressively improve the suitability of the classifier 206.

Where user behaviour is classified by the classifier 206 as non-compliant, the access control component 208 is arranged to invoke a credential-based authenticator 210 to confirm a state of authorisation for the user. The credential-based authenticator 210 is a hardware, software, firmware or combination component for authenticating a user's authorisation to access the device 200 based on credential and/or challenge responses of the user. For example, a credential-based authentication scheme can include, inter alia: an authentication scheme using a user identifier and password; a key-based user authentication scheme; a token-based user authentication scheme; a multi-factor authentication scheme in which authentication is requested via a different device, and other credential-based authentication schemes as will be apparent to those skilled in the art. The premise of a credential-based authentication scheme is that an ability to present authorised credentials or suitably respond to an authentication challenge serves to confirm a state of authorisation to access the device 200. Thus, the authentication-based authentication scheme is used as a definitive confirmation of a state of authorisation of a user. Thus, a user exhibiting behaviour classified by the classifier 206 as non-compliant but nonetheless able to successfully authenticate using the credential-based authentication scheme is permitted to access the device 200 by the access control component 208. Furthermore, such a user exhibiting behaviour classified as non-compliant and nonetheless being permitted access to the device 200 based on the credential-based authentication scheme is used by the access control component 208 to generate a new training example for the classifier 206. Such new training example is used to constructively train the classifier 206 in the manner previously described so as to improve the suitability of the classifier to classify behaviour such as that which was previously classified as non-compliant but which was nonetheless determined to be behaviour of an authorised user based on the credential-based authentication scheme. Notably, the new training example in the case of a user authenticated by a credential-based authentication scheme, will include the behaviour of the user and the credential-based authentication outcome: i.e., that the user is authorised and, thus, should be deemed compliant in the classifier.

Where user behaviour is classified by the classifier 206 as non-compliant and the user fails to successfully authenticate using the credential-based authentication scheme, access to the device for the user is prevented. In this way, unauthorised users are prevented from accessing the device 200. Preferably, the access control component 208 is further adapted to trigger or perform additional training of the classifier 206 responsive also to negative authentications of a user accessing the device 200 so as to further improve a model, data structure, neural network or other machine learning construct of the classifier 206 and, therefore, the suitability of the classifier 206 for classifying user behaviours as compliant (for authorisation) or non-compliant (for non-authorisation). That is, where a user is found to be non-compliant based on the classifier 206 and the user fails to authenticate using the credential-based authentication scheme, the behaviour of such user can be used to reinforce the non-compliance in the classifier 206 by a further training example generated from the behaviour and the non-authorised status of the user.

In this way, the classifier 206 is progressively improved through constructive training during repeated authentication processes.

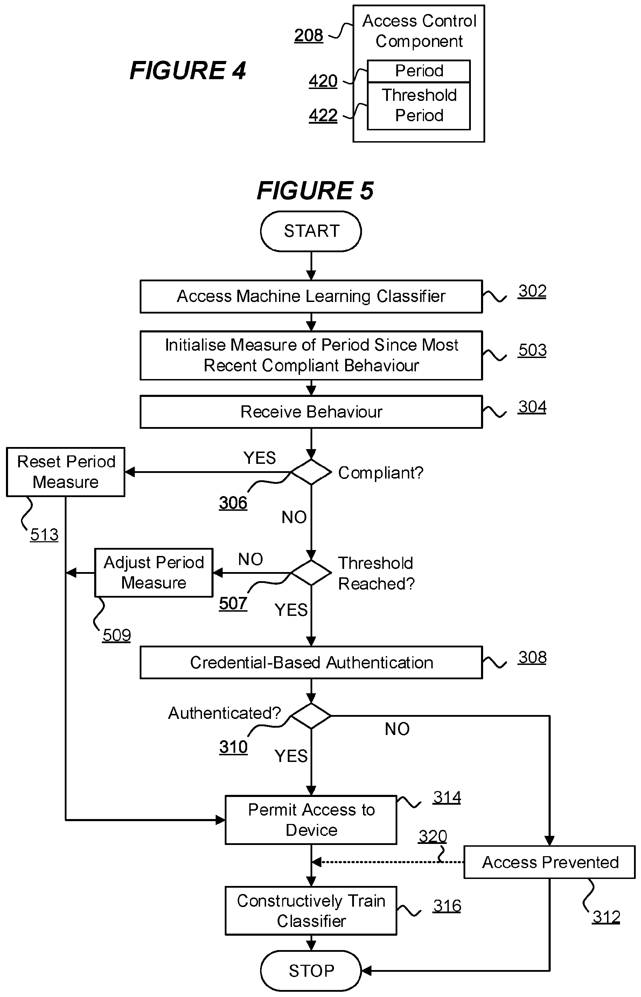

It will be appreciated that, while the access control component 208, the classifier 206, the trainer 204 and the credential-based authenticator 210 are illustrated in Figure 2 (and other Figures) as being separate from the device 200, any or all of these components can be included in, integrated with, provided by, stored in and/or executed by the user device 200. In a preferred embodiment, all of these components are provided as services, facilities or features of the device 200 such that the device 200 is operable to perform access control without external assistance. In alternative embodiments, any of the components 204 to 210 may be provided by a separate computer system such as a network connected computer system accessible to the device 200 by way of a communications network, such as by secure network communication using encryption. Furthermore, any of components 204 to 210 can be provided as cloud based or virtual services. The same applied to the other embodiments described with respect to Figures 4 to 11.

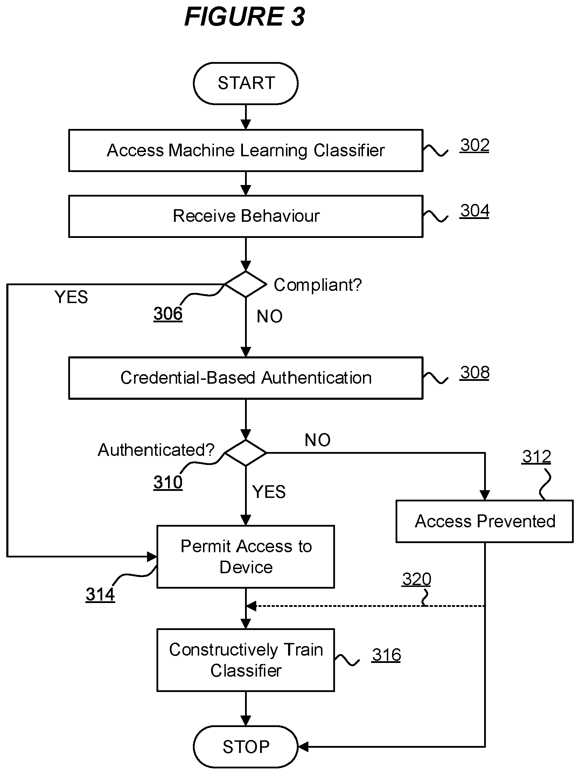

Figure 3 is a flowchart of a method of access control according to an embodiment of the present invention. Initially, at step 302, the access control component 208 accesses the machine learning classifier 206 that is trained based on at least one prior behaviour of a user using the device. At step 304 the access control component 208 receives a subsequent behaviour of a user and determines, at step 306, if the subsequent behaviour is compliant by classifying the subsequent behaviour using the classifier 206. If the classifier 206 classifies the behaviour as compliant the method proceeds to step 314. Otherwise, the method proceeds to step 308. At step 308 the access control component 208 employs a credential-based authentication scheme by way of the credential-based authenticator 210 to authenticate the user. If the user fails to authenticate by the credential-based authentication at step 310 the method proceeds to step 312 where access to the device is prevented or ceased. Alternatively, if the method determines, at step 310, that the user successfully authenticates by the credential-based authentication, the method proceeds to step 314.

Step 314 is arrived at either from step 306 in the event of a compliant classification of user behaviour, or from step 310 in the event of successful authentication of the user by the credential-based authentication scheme. At step 314 the access control component 208 permits the user access to the device 200. At step 316, the access control component 208 generates a new training example for the trainer 204 to constructively train the classifier 206, the training example being based on the subsequent user behaviour and the appropriate authentication outcome. Notably, the appropriate authentication outcome for users authorised by way of compliant classification or authenticated by way of the credential-based authentication scheme is "authorised" (or "compliant"), even if (in the event of credential-based authorised users) the original classification for the user was non-compliant.

As previously described, in the event of non-compliant behaviour of a user that further fails to authenticate by way of the credential-based authentication scheme, access is prevented as step 312. In some embodiments, the behaviour, non-compliant and non-authorised state of such a user is additionally used as a new training example at step 316 to constructively train the classifier 206. This serves to improve the classifier's suitability in respect of non-authorised users. This optional step from step 312 is indicated by a broken line in Figure 3.

Figure 4 is an alternative arrangement of the access control component 208 of Figure 2 in accordance with an embodiment of the present invention. Notably, the access control component 208 of Figure 4 is identical to, and used in the same arrangement as, that described with respect to Figure 2 except for differences described below.

The access control component 208 includes a period 420 as a variable, parameter or other suitable data item for storing an indication of a period since a most recent compliant behaviour of a user occurred. Notably, the period can be a time period measured in, for example, seconds, minutes and/or hours. Thus, the period can be recorded as a time of a most recent compliant behaviour such that a period since such time can be readily evaluated. Alternatively, the period can be a measure of a number of authentication attempts that have occurred resulting in non-compliance. For example, the period can be a measure of a number of occasions when access to the device 200 is prevented based on non-compliant behaviour.

The access control component 208 further includes a threshold period 422 as a predefined size, length or value of a period (whether measured in terms of, for example, time or non-compliant behaviour classifications), beyond which access to the device 200 is to be prevented. In use, the access control component 208 of Figure 4 operates in substantially the same way as that of Figure 2 except that non-compliant behaviour (as determined by the classifier 206) does not lead to credential-based authentication and potential access prevention until a period 420 since a most recent compliant behaviour meets or exceeds the threshold period 422. Thus, in this way, the access control component 208 can be seen to be permissive in the event of non-compliant behaviour for a predetermined period up to the threshold period 422. Such a permissive approach to authentication is useful, for example, for non-critical devices, services or resources such as subscription resources where non-compliance indicates non-subscription (e.g. a user has not paid to use the device 200) but cessation of access can be postponed for a period (the threshold period 422) in the event that behaviour transitions to compliant behaviour. A tangible example of the usefulness of such an approach can be seen in the event that an authorised user of the device 200 (e.g. a paid-up subscriber) hands the device to a third party briefly for demonstration purposes. The third party is not a paid-up subscriber and is not an authorised user. The third party behaviours will be classified as non-compliant, but for the period up to the threshold period 422 access is not prevented such that the third party can utilise the device within the period. Once the threshold period is reached then the access control component 208 reverts to the approach described with respect to Figure 2 in which a credential-based authentication scheme is invoked.

Figure 5 is a flowchart of a permissive access control mechanism for a user device 200 according to an embodiment of the present invention. Many of the steps of Figure 5 are identical to those described above with respect to Figure 3 and a description of these will not be repeated here. Where Figure 5 differs from Figure 3, Figure 5 additionally includes a step 503 following step 302 at which the measure of a period 420 since a most recent compliant behaviour is initialised, for example, by setting the period 420 to zero or, in the case of a period measured in time, setting the period 420 to a current or predetermined time. Further, in Figure 5, where a user behaviour is classified as compliant at step 306, the method proceeds to reset the period since most recent compliant behaviour at step 513, for example by setting the period 420 to zero or, in the case of a period measured in time, setting the period 420 to a current time. In Figure 5, where a user behaviour is classified as non-compliant at step 306, the method proceeds to step 507 where the access control component 208 determines if the threshold period 422 is reached. This can be achieved by a comparison between the period 420 and the threshold 422. While the threshold is not reached the method proceeds to step 509 where the period measure 420 is adjusted by, for example, incrementing it or updating it to indicate an increase in the time since a most recent compliant behaviour. Subsequently, step 509 leads to step 314 where access to the device is permitted while the threshold is not reached. Where the threshold period is determined to be reached at step 507, the method proceeds to step 308 where credential-based authentication is performed as described above with respect to Figure 3. All other steps of Figure 5 are as previously described with respect to Figure 3.

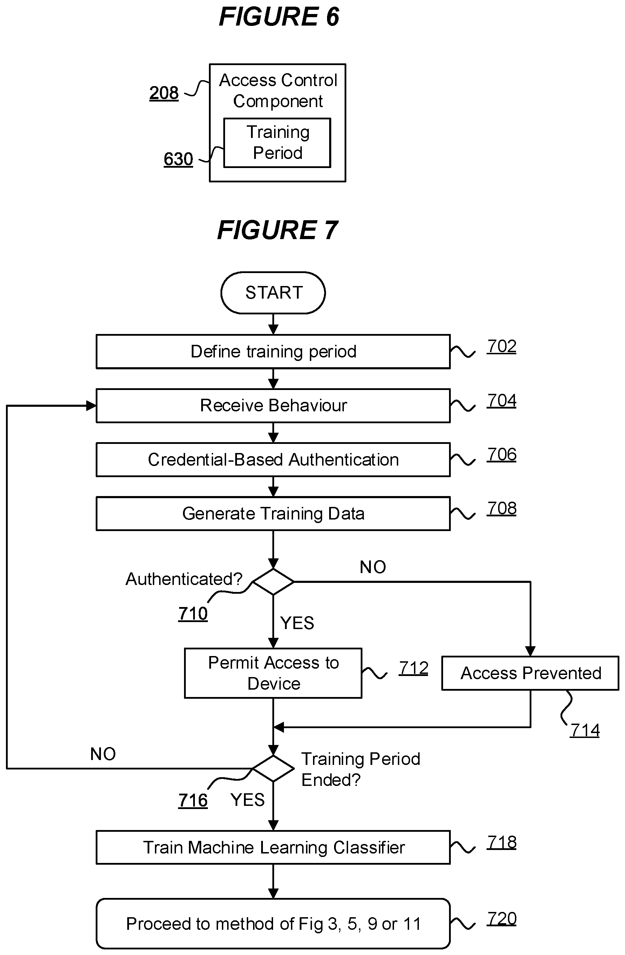

Figure 6 is an alternative arrangement of the access control component 208 of Figure 2 in accordance with an embodiment of the present invention. Notably, the access control component 208 of Figure 6 is identical to, and used in the same arrangement as, that described previously with respect to Figures 2 and/or Figure 4 except for differences described below.

The access control component 208 of Figure 6 is adapted for initial training of the classifier 206 such that the classifier 206 is suitable for classifying behaviour of a user as compliant or non-compliant as indicative of authorised and non-authorised users respectively. Notable, access control component 208 as will be described here with reference to Figures 6 and 7 is used to undertake or trigger initial training of the classifier 206. This initial training is required for a classifier 206 that is as yet untrained or not sufficiently trained for the purpose of use in the arrangements of, for example, Figures 2, 3, 4 and 5. Thus, the training triggered or performed by the access control component 208 during the authentication process of, for example, Figures 3 and 5, is the same as previously described. The initial training provided by the access control component 208 here and with respect to Figures 6 and 7 is additional to this.

The access control component 208 of Figure 6 further includes a training period 630 variable, parameter or other suitable data item. The training period 630 is a predetermined indication of a period during which training of the classifier 206 is performed and during which all authentication of users to access the device 200 is performed using the credential-based authenticator 210 as previously described. The training period 630 can be constituted as, for example, a time period, a duration, a number of training examples, a number of authentication attempts or other suitable definition of a period for training as will be apparent to those skilled in the art. In use, the access control component 208 determines if an authentication is to take place within the training period 630 and, if so, performs a credential-based authentication process to authenticate a user. Behaviour information is nonetheless received by the access control component 208 and is used along with the result of the credential-based authentication process to generate training data as training examples for training the classifier 206 by the trainer 204. Notably, training examples are generated for both authenticated users (such examples including the user behaviour and compliant state), and non-authenticated users (such examples including the user behaviour and non-compliant state). Once the training period 630 has ended, passed or otherwise expired then the training examples are used to train the classifier 206 such that the classifier 206 is suitable for use in methods of behavioural authentication such as those described with respect to Figures 3, 5, 9 or 11.

Figure 7 is a flowchart of a method of training a classifier 206 for use with the embodiments of Figures 3, 5, 9 and/or 11 in accordance with an embodiment of the present invention. Initially, at step 702, the training period 630 is defined. At step 704 user behaviour for a user is received from the behaviour component 202. At step 706 a credential-based authentication scheme is used to determine a state of authentication of the user - either authorised or non-authorised. At step 708, a new training example is generated as training data for the classifier 206 based on the received behaviour information and the state of authorisation for the user. At steps 710, 712 and 714 access to the device is permitted or prevented in dependence on the state of authentication of the user based on the credential-based authentication scheme. At step 716 the method determines if the training period has ended and loops to step 704 until the training period has ended. Once the training period ends the method proceeds to step 718 where the access control component 208 undertakes or triggers training of the classifier 206 by the trainer 204 based on the training examples generated at the iterated step 708. Subsequently, the trained classifier 206 is used in methods of behavioural authentication such as those described with respect to Figures 3, 5, 9 or 11.

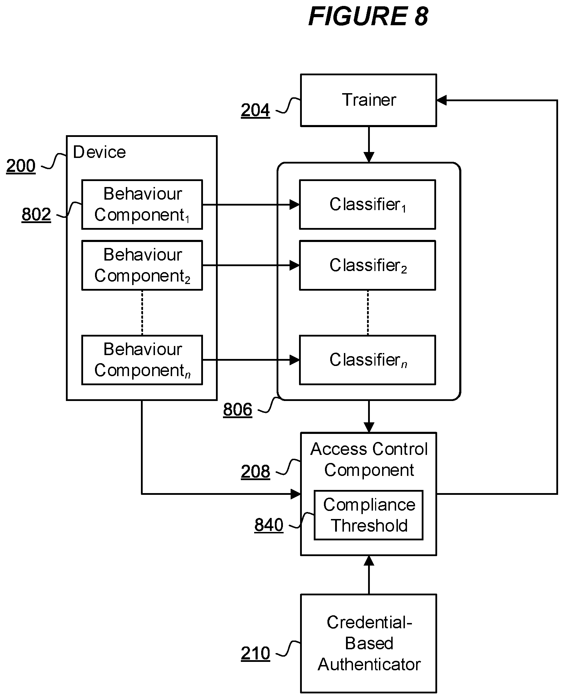

Figure 8 is a component diagram of an arrangement for behaviour-based access control for a user device 200 according to an embodiment of the present invention. Many of the elements of Figure 8 are identical to those described above with respect to Figure 2 and these will not be repeated here. The device 200 of Figure 8 includes a plurality of behaviour components 802 each adapted to provide different behaviour information for a user of the device. For example, each behaviour component 802 can constitute a different sensor or set of sensors for determining behaviour of a user. Further, in Figure 8 multiple classifiers 806 are provided, each corresponding to a behaviour component 802 of the device. While each of the classifiers 806 acts substantially as previously described with respect to Figures 1 to 7, the multiplicity of classifiers 806 is such as to provide a classifier for each different behaviour information received from the different multiple behaviour components 802. Thus, for example: a location sensor behaviour component can have associated a classifier for classifying location information; a user gesture behaviour component can have associated a classifier for classifying user gestures; and so on.

Further, the access control component 208 of Figure 8 includes a predetermined compliance threshold 840 as a parameter, variable or other data item for determining a strength, confidence or other degree of compliance of all classifiers 806 in aggregate required in order to authenticate a user and provide access to the device 200. Thus, in use, each classifier 806 classifies behaviour information from the behaviour components 802 as previously described in order to determine a classification as either compliant or non-compliant. Furthermore, each classifier is operable to provide a strength, confidence or other degree of membership of received behaviour with its determined classification such that a degree of membership of behaviour with a compliant or non-compliant classification is provided. Such a degree of membership can be provided as, for example, a weight of connections in a neural network leading to the classification outcome, a confidence measure of the classifier, or other suitable measure of a degree of membership of behaviour with a classification. For example, state vector machines can allow the retrieval of classification confidence on which basis a prediction classification is generated. Alternatively, a classifier 806 that provides a probabilistic score for its classifications, such as logistic regression classifiers, can be used whereby the score can constitute such degree of membership.

The degree of membership of each classifier for behaviours of a user are aggregated such as by statistical average, summation, or other suitable means. Thus, a degree of compliance of a user is evaluated. This degree of compliance is compared with the compliance threshold 840 and only where the threshold degree is met will compliance of a user be determined for the purpose of permitting access to the device. Non-compliance can result in the use of a credential-based authentication scheme as previously described.

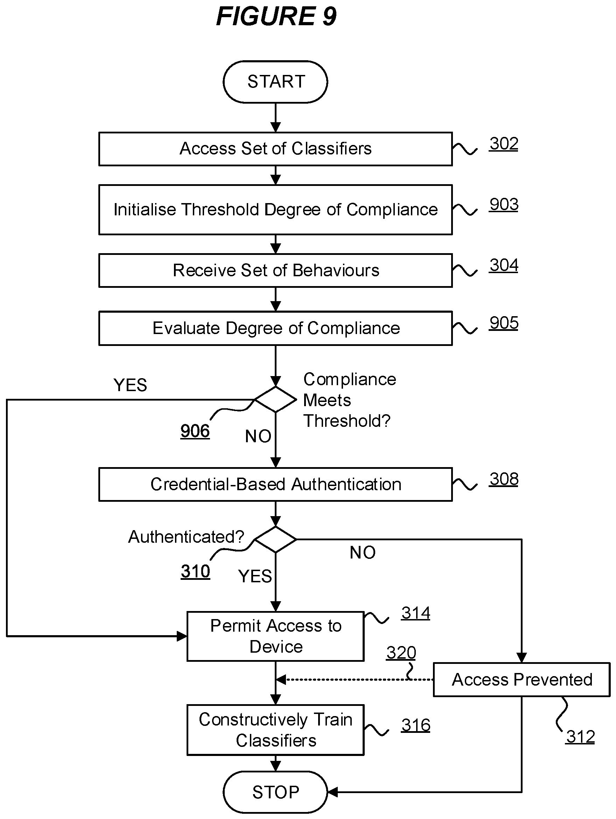

Figure 9 is a flowchart of a method of access control for the embodiment of Figure 8 in accordance with an embodiment of the present invention. Many of the steps of Figure 9 are identical to those described previously with respect to Figure 2 and these will not be repeated here. Figure 9 additionally includes, after step 302, new step 903 in which the threshold degree of compliance 840 is initialised to a predetermined threshold degree. Subsequently, after receipt of a set of behaviours 304 from the behaviour components 802, the method evaluates a degree of compliance at step 905 on aggregate for all behaviours based on the classifiers 206 for the behaviours. At step 906 the method determines if the degree of compliance meets the threshold degree 840 and, if the threshold is met, the method proceeds to step 314 where access to the device is permitted. Alternatively, if the threshold is not met, the method proceeds to step 308 where a credential-based authentication scheme is employed. All other steps of the method of Figure 9 are identical to those described with respect to Figure 2.

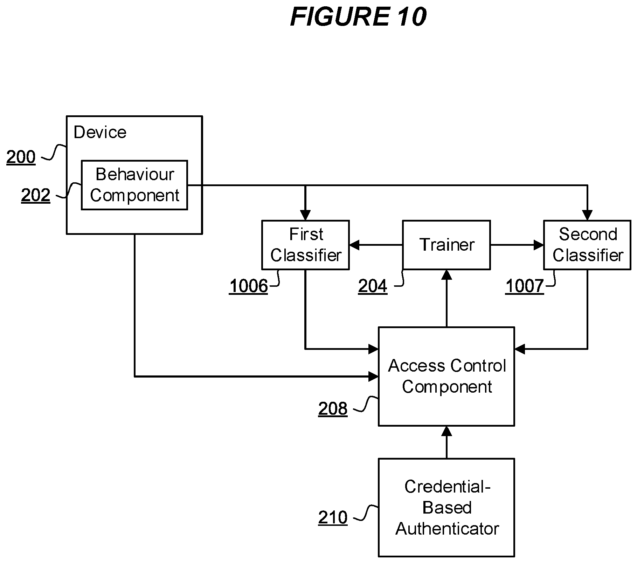

Figure 10 is a component diagram of an arrangement for multi-classifier access control for a user device 200 according to an embodiment of the present invention. Many of the elements of Figure 10 are identical to those described above with respect to Figures 2, 4, 6 and 8 and these will not be repeated here. Figure 10 includes a pair of classifiers - a first classifier 1006 and a second classifier 1007, each of which is substantially consistent with the classifiers as hereinbefore described. The first and second classifiers 1006, 1007 of Figure 10 are used to provide a multi-level classification scheme of user behaviour such that atypical behaviour that is classified as non-compliant by the first classifier 1006 can be processed by the second classifier 1007 to determine if such atypical behaviour is nonetheless typical for the user of non-compliant behaviour according to the first classifier 1006. Such an approach is particularly beneficial where the device 200 transitions between two distinct contexts such as: a primary context in which the device is primarily used and in which user behaviour is modelled by the first classifier 1006 as most typical or prevalent behaviour; and a secondary context in which the device is occasionally used an in which user behaviour is modelled by the second classifier 1007. Such different contexts are widely experienced in real use-cases, with examples including: a secondary context in which the device 200 is used in an aircraft or other vehicle that is occasional and can restrict, constrain or otherwise affect user behaviour due to, for example, constraints of space or usage permission; a secondary context in which the device 200 is occasionally used in different environmental conditions such as in the dark, at night, in a sunny location or the like, such that user behaviour is affected due to, for example, a need to operate the device differently to provide illumination or avoid glare or the like; a secondary context in which the device is put to a different use-case such as, for example, an everyday device being used as a presentation device for sharing content with a group in which case the device may be handled, operated or otherwise used differently exhibited by differing behaviours; and other such secondary contexts in which behaviours occasionally differ from a primary context as will be apparent to those skilled in the art. Notably, the exact nature, cause and type of such distinction between a primary and secondary context are not important to embodiments of the present invention which are arranged to learn classification schemes and model behaviour in contexts irrespective of the nature or cause.

Thus, in the arrangement of Figure 10, the first classifier 1006 operates substantially as previously described with respect to Figure 2 to classify user behaviour to determine compliance or non-compliance as a basis for access control for the device 200. The second classifier 1007 provides a secondary classification scheme for behaviours that are classified non-compliant by the first classifier 1006 but where a user otherwise successfully authenticates using a credential-based authentication scheme. The second classifier 1007 is therefore trained based on training examples arising from behaviours found non-compliant by the first classifier 1006 so as to classify such behaviours as compliant or non-compliant with typical behaviours in a secondary user context. Preferably, such behaviours found to be non-compliant by the first classifier 1006 but authenticated by the credential-based authenticator 210 are not used as training examples for the first classifier 1006 to provide a distance between the two classifiers 1006, 1007 allowing each classifier to specialise in their respective user contexts. In contrast, behaviours leading to a complete failure to authenticate by classification as non-compliant by both the first and second classifiers 1006, 1007 and a failure to authenticate by credential-based authentication can be used as training examples for both classifiers 1006, 1007 since such behaviours are indicative of non-compliant user behaviour in both primary and secondary user contexts and for which device access should be prevented.

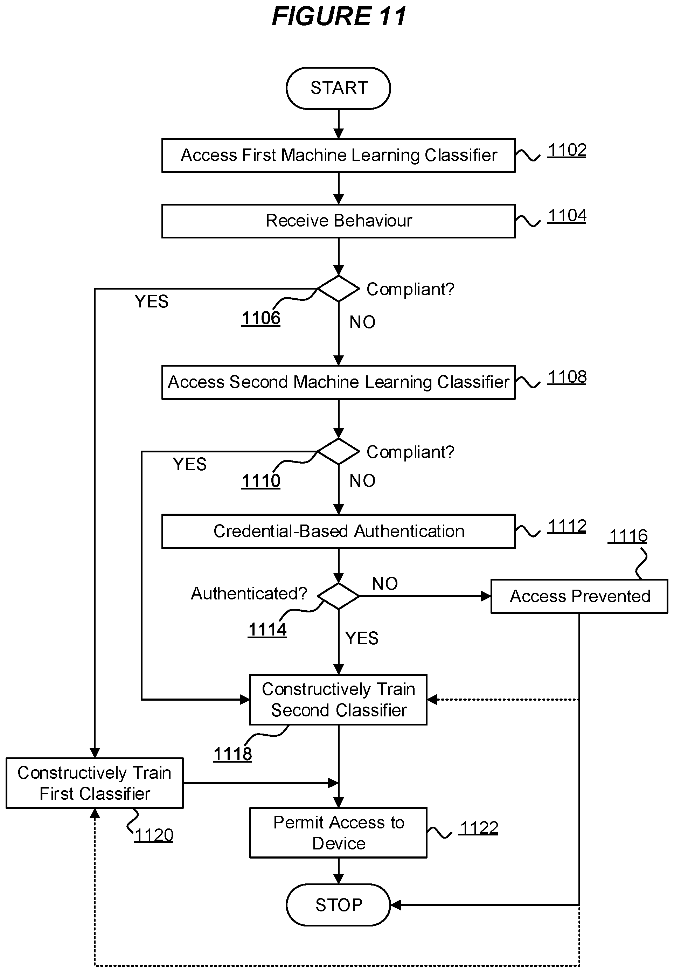

Figure 11 is a flowchart of a method of access control for the embodiment of Figure 10 in accordance with an embodiment of the present invention. Initially, at step 1102, the method accesses the first machine learning classifier 1006 and receives a user behaviour at step 1104. The first classifier 1006 classifies the received behaviour and where the behaviour is classified as compliant at step 1106 the method proceeds to step 1120 where the first classifier is constructively trained using the behaviour and compliant status as a new training example. Following constructive training at step 1120, access to the device is provided to the user at step 1122.

Where the behaviour is determined at step 1106 to be non-compliant based on the first classifier 1006, the method proceeds to step 1108. At step 1108 the second classifier 1007 is accessed and the behaviour is classified according to the second classifier 1007. Where the behaviour is classified as compliant by the second classifier 1007 at step 1110 the method proceeds to step 1118 where the second classifier 1007 is constructively trained using the behaviour and compliant status as a new training example. Following constructive training at step 1118, access to the device is provided to the user at step 1122.

Where the behaviour is determined at step 1110 to be non-compliant based on the second classifier 1007, the method proceeds to step 1112 where a credential-based authentication scheme is employed to authenticate the user. If the user is successfully authenticated using the credential-based authentication scheme at step 1114, the method proceeds to step 1118 which as been previously described. If the user is not successfully authenticated using the credential-based authentication scheme at step 1114, the method proceeds to step 1116 where access to the device 200 is prevented. Notably, on failure to authenticate by the credential-based authentication scheme, the behaviour and it's status as non-compliant in both the first and second classifiers 1006, 1007 can be used to constructively train either or both classifiers 1006, 1007 to improve the suitability of the classifiers 1006, 1007 to classify non-compliance effectively. This is indicated by the logical flows in Figure 11 depicted by broken lines.

Insofar as embodiments of the invention described are implementable, at least in part, using a software-controlled programmable processing device, such as a microprocessor, digital signal processor or other processing device, data processing apparatus or system, it will be appreciated that a computer program for configuring a programmable device, apparatus or system to implement the foregoing described methods is envisaged as an aspect of the present invention. The computer program may be embodied as source code or undergo compilation for implementation on a processing device, apparatus or system or may be embodied as object code, for example.

Suitably, the computer program is stored on a carrier medium in machine or device readable form, for example in solid-state memory, magnetic memory such as disk or tape, optically or magneto-optically readable memory such as compact disk or digital versatile disk etc., and the processing device utilises the program or a part thereof to configure it for operation. The computer program may be supplied from a remote source embodied in a communications medium such as an electronic signal, radio frequency carrier wave or optical carrier wave. Such carrier media are also envisaged as aspects of the present invention.

It will be understood by those skilled in the art that, although the present invention has been described in relation to the above described example embodiments, the invention is not limited thereto and that there are many possible variations and modifications which fall within the scope of the invention.

The scope of the present invention includes any novel features or combination of features disclosed herein. The applicant hereby gives notice that new claims may be formulated to such features or combination of features during prosecution of this application or of any such further applications derived therefrom. In particular, with reference to the appended claims, features from dependent claims may be combined with those of the independent claims and features from respective independent claims may be combined in any appropriate manner and not merely in the specific combinations enumerated in the claims.

## Claims

1. A computer implemented method of access control for a user device (200) having a plurality of components (802) each determining a different behaviour of a user of the user device, the method comprising:
retrieving (302), for each component, a machine learning classifier (806) trained based on a prior behaviour of the user using the user device, each classifier classifying user behaviour as compliant or non-compliant, such that compliant behaviour is determined by the classifier to be consistent with prior behaviour of an authorised user;
initialising (903) a threshold degree of compliance by all classifiers, in aggregate, for permitting access to the user device;
classifying (905, 906), for each component, a respective subsequent behaviour as compliant or non-compliant using the respective classifier;
evaluating a degree of compliance on aggregate for all behaviours, subsequent to the prior behaviour, based on the classifiers for the behaviours;
determining if the degree of compliance meets the threshold;
responsive to a determination that the aggregate degree of compliance of the subsequent behaviours fails to meet the threshold degree of compliance, requesting (308) a credential-based authentication of the user and permitting access (314) to the device in response to the credential-based authentication being successful,
responsive to the credential-based authentication being unsuccessful, preventing access (312) to the user device;
wherein permitting access to the user device further includes constructively training (316) the classifiers based on the subsequent behaviours as a compliant behaviour by providing the subsequent behaviours as additional training example for the classifiers; and
wherein preventing access to the user device further includes constructively training (316) the classifiers based on the subsequent behaviour as a non-compliant behaviour by providing the subsequent behaviour as an additional training example.

2. The method of claim 1 wherein the threshold degree of compliance is a proportion of classifiers classifying behaviours as compliant.

3. The method of claim 2 wherein each of the classifiers is weighted for determining the threshold degree of compliance.

4. The method of any preceding claim wherein the component is one or more of: a location sensor; a position sensor; an orientation sensor; an accelerometer; an input device; a touch-screen; a temperature sensor; a time determiner; a pressure sensor; an olfactory sensor; a chemical sensor; a biometric sensor; a heart rate sensor; a cardiogram generator; a sound sensor; a voice recognition component; a handwriting recognition component; a global positioning system; and a gyroscope.

5. The method of any preceding claim wherein the credential-based authentication includes one or more of: an authentication scheme using a user identifier and password; a key-based user authentication scheme; a token-based user authentication scheme; and a multi-factor authentication scheme in which authentication is requested via a different device.

6. A computer system including a processor (102) and memory (104) storing computer program code for performing the steps of the method of any preceding claim.

7. A computer program element comprising computer program code to, when loaded into a computer system and executed thereon, cause the computer to perform the steps of a method as claimed in any of claims 1 to 5.

## Patentansprüche

1. Computerimplementiertes Verfahren für eine Zugriffssteuerung für eine Benutzervorrichtung (200), die mehrere Komponenten (802) aufweist, die jeweils eine unterschiedliche Verhaltensweise eines Benutzers der Benutzervorrichtung bestimmen, wobei das Verfahren umfasst:
Abrufen (302) eines Maschinenlernklassifikators (806) für jede Komponente, der basierend auf mindestens einer früheren Verhaltensweise des Benutzers, der die Benutzervorrichtung verwendet, trainiert wird, wobei jeder Klassifikator eine Benutzerverhaltensweise so als konform oder nicht konform klassifiziert, dass eine konforme Verhaltensweise dadurch bestimmt wird, dass der Klassifikator einer früheren Verhaltensweise eines autorisierten Benutzers entspricht;
Initialisieren (903) eines Schwellengrads an Konformität zusammengefasst durch alle Klassifikatoren, um Zugriff auf die Benutzervorrichtung zu ermöglichen;
Klassifizieren (905, 906) einer jeweiligen nachfolgenden Verhaltensweise als konform oder nicht konform unter Verwendung des jeweiligen Klassifikators für jede Komponente;
Bewerten eines Grads an Konformität zusammengefasst für alle Verhaltensweisen nach dem vorherigen Verhalten auf der Grundlage der Klassifikatoren für die Verhaltensweisen;
Bestimmen, ob der Grad an Konformität die Schwelle erfüllt;
als Antwort auf eine Bestimmung, dass der zusammengefasste Grad an Konformität der nachfolgenden Verhaltensweisen den Schwellengrad an Konformität nicht erfüllt, Anfordern (308) einer nachweisbasierten Authentifizierung des Benutzers und Ermöglichen eines Zugriffs (314) auf die Vorrichtung als Antwort darauf, dass die nachweisbasierte Authentifizierung erfolgreich ist,
als Antwort darauf, dass die nachweisbasierte Authentifizierung nicht erfolgreich ist, Verhindern eines Zugriffs (312) auf die Benutzervorrichtung;
wobei das Erlauben eines Zugriffs auf die Benutzervorrichtung ferner ein konstruktives Trainieren (316) der Klassifikatoren basierend auf den nachfolgenden Verhaltensweisen als eine konforme Verhaltensweise durch Bereitstellen der nachfolgenden Verhaltensweisen als zusätzliches Trainingsbeispiel für die Klassifikatoren umfasst; und
wobei das Verweigern eines Zugriffs für die Vorrichtung ferner ein konstruktives Trainieren (316) der Klassifikatoren basierend auf der nachfolgenden Verhaltensweise als eine nicht konforme Verhaltensweise durch Bereitstellen der nachfolgenden Verhaltensweisen als zusätzliches Trainingsbeispiel umfasst.

2. Verfahren nach Anspruch 1, wobei der Schwellengrad an Konformität ein Anteil von Klassifikatoren ist, die Verhaltensweisen als konform klassifizieren.

3. Verfahren nach Anspruch 2, wobei jeder der Klassifikatoren gewichtet wird, um den Schwellengrad an Konformität zu bestimmen.

4. Verfahren nach einem der vorhergehenden Ansprüche, wobei die Komponente eine oder mehrere ist von: einem Ortssensor; einem Positionssensor; einem Orientierungssensor; einem Beschleunigungsmesser; einer Eingabevorrichtung; einem Touchscreen; einem Temperatursensor; einem Zeitermittler; einem Drucksensor; einem Geruchssensor; einem chemischen Sensor; einem biometrischen Sensor; einem Herzfrequenzsensor; einem Kardiogrammgenerator; einem Schallsensor; einer Spracherkennungskomponente; einer Handschrifterkennungskomponente; einem globalen Positionsbestimmungssystem; und einem Kreisel.

5. Verfahren nach einem der vorhergehenden Ansprüche, wobei die auf einem nachweisbasierte Authentifizierung eine oder mehrere umfasst von: einem Authentifizierungsschema, das eine Benutzerkennung und ein Passwort verwendet; einem schlüsselbasierten Benutzerauthentifizierungsschema; einem tokenbasierten Benutzerauthentifizierungsschema; und einem Mehrfaktor-Authentifizierungsschema, bei dem die Authentifizierung über eine andere Vorrichtung angefordert wird.

6. Computersystem, das einen Prozessor (102) und einen Speicher (104), der Computerprogrammcode zum Ausführen der Schritte des Verfahrens nach einem der vorhergehenden Ansprüche speichert, umfasst.

7. Computerprogrammelement, das Computerprogrammcode umfasst, der, wenn er in ein Computersystem geladen und darauf ausgeführt wird, den Computer dazu veranlasst, die Schritte eines Verfahrens nach einem der Ansprüche 1 bis 5 auszuführen.

## Revendications

1. Procédé de contrôle d'accès, mis en œuvre par ordinateur, pour un dispositif utilisateur (200) possédant une pluralité de composants (802) déterminant chacun un comportement différent d'un utilisateur du dispositif utilisateur, le procédé comprenant :
la récupération (302), pour chaque composant, d'un classificateur d'apprentissage automatique (806) entraîné sur la base d'un comportement antérieur de l'utilisateur utilisant le dispositif utilisateur, chaque classificateur classifiant un comportement d'utilisateur comme conforme ou non conforme, de sorte qu'un comportement conforme est déterminé par le classificateur comme étant cohérent avec un comportement antérieur d'un utilisateur autorisé ;
l'initialisation (903) d'un degré seuil de conformité par tous les classificateurs, de manière agrégée, pour permettre l'accès au dispositif utilisateur ;
la classification (905, 906), pour chaque composant, d'un comportement postérieur respectif comme conforme ou non conforme au moyen du classificateur respectif ;
l'évaluation d'un degré de conformité de manière agrégée pour tous les comportements, postérieurs au comportement antérieur, sur la base des classificateurs pour les comportements ;
la détermination si le degré de conformité atteint ou non le seuil ;
en réponse à une détermination que le degré de conformité agrégé des comportements postérieurs n'atteint pas le degré seuil de conformité, la demande (308) d'une authentification de l'utilisateur basée sur des informations d'identification et l'autorisation de l'accès (314) au dispositif en réponse à la réussite de l'authentification basée sur des informations d'identification,
en réponse à l'échec de l'authentification basée sur des informations d'identification, l'empêchement de l'accès (312) au dispositif utilisateur ;
dans lequel l'autorisation de l'accès au dispositif utilisateur comporte en outre l'entraînement constructif (316) des classificateurs sur la base des comportements postérieurs considérés comme conformes par fourniture des comportements postérieurs à titre d'exemple d'entraînement supplémentaire pour les classificateurs ; et
dans lequel l'empêchement de l'accès au dispositif utilisateur comporte en outre l'entraînement constructif (316) des classificateurs sur la base du comportement postérieur considéré comme non conforme par fourniture du comportement postérieur à titre d'exemple d'entraînement supplémentaire.

2. Procédé selon la revendication 1, dans lequel le degré seuil de conformité est une proportion de classificateurs classifiant des comportements comme conformes.

3. Procédé selon la revendication 2, dans lequel chacun des classificateurs est pondéré pour la détermination du degré seuil de conformité.

4. Procédé selon l'une quelconque des revendications précédentes, dans lequel le composant est un ou plusieurs éléments parmi : un capteur de localisation ; un capteur de position ; un capteur d'orientation ; un accéléromètre ; un dispositif d'entrée ; un écran tactile ; un capteur de température ; un module de détermination temporelle ; un capteur de pression ; un capteur olfactif ; un capteur chimique ; un capteur biométrique ; un capteur de fréquence cardiaque ; un générateur de cardiogramme ; un capteur de son ; un composant de reconnaissance vocale ; un composant de reconnaissance d'écriture manuscrite ; un système mondial de positionnement ; et un gyroscope.

5. Procédé selon l'une quelconque des revendications précédentes, dans lequel l'authentification basée sur des informations d'identification comporte un ou plusieurs éléments parmi : un schéma d'authentification utilisant un identifiant d'utilisateur et un mot de passe ; un schéma d'authentification d'utilisateur basé sur une clé ; un schéma d'authentification d'utilisateur basé sur un jeton ; et un schéma d'authentification multifacteur dans lequel une authentification est demandée par l'intermédiaire d'un dispositif différent.

6. Système informatique comportant un processeur (102) et une mémoire (104) stockant un code de programme d'ordinateur destiné à réaliser les étapes du procédé selon l'une quelconque des revendications précédentes.

7. Élément de programme d'ordinateur comprenant un code de programme d'ordinateur destiné, lorsqu'il est chargé dans un système informatique et exécuté sur celui-ci, à amener l'ordinateur à réaliser les étapes d'un procédé tel que revendiqué dans l'une quelconque des revendications 1 à 5.
